# EUROPÄISCHE PATENTANMELDUNG

(11) **EP 1 099 860 A1**
(43) Veröffentlichungstag der Anmeldung: **16.05.2001**
(21) Anmeldenummer: 99811027.4
(22) Anmeldetag: 09.11.1999
(51) Int. Cl.: F16B 5/06

(54) **Anordung mit Profilstäben und zwischen diesen eingesetzer platte**

(71) Anmelder: Zihlmann Engineering, 5436 Würenlos (CH)
(72) Erfinder: Zihlmann, Siegfried, 5436 Würenlos (CH)
(74) Vertreter: Patentanwälte Breiter + Wiedmer AG

(57) **Zusammenfassung**

Bei einer Anordnung mit wenigstens zwei zumindest eine hinterschnittene Längsnut (52) aufweisenden Profilstäben (50), und mit wenigstens einer zwischen einander gegenüberstehenden Längsnuten (52) mittels in diesen verankerten Befestigungselementen auswechselbar eingesetzten Platte (60) weist jedes Befestigungselement ein erstes Befestigungsteil (10) mit einer im Inneren der Längsnut (52) einer Hinterschneidungsfläche (56) gegenüberliegenden ersten Anschlagfläche (18) und mit einer einer ersten Seite (62) der Platte (60) in deren Randbereich gegenüberliegenden ersten Anlagefläche (20) und ein zweites Befestigungsteil (30) mit einer im Inneren der Längsnut (52) einer Hinterschneidungskante (57) gegenüberliegenden zweiten Anschlagfläche (36) und mit einer der zweiten Seite (64) der Platte (60) und der ersten Anlagefläche (20) des ersten Befestigungsteils (10) gegenüberliegenden zweiten Anlagefläche (40) auf. Die beiden Befestigungsteile (10, 30) bestehen aus einem aus Federstahl geformten Blechstück. Die Ausbildung der Befestigungsteile ermöglicht eine schnelle Montage und Demontage von Platten, die auch auf Lichtmass ohne Luftspalt zugeschnitten werden können.

## Beschreibung

Die Erfindung betrifft eine Anordnung mit wenigstens zwei zumindest eine hinterschnittene Längsnut aufweisenden Profilstäben und mit wenigstens einer zwischen einander gegenüberstehenden Längsnuten mittels in diesen verankerten Befestigungselementen auswechselbar eingesetzten Platte.

Profilstäbe mit hinterschnittenen Längsnuten können auf einfache Weise zu Gerüsten oder Gerippen zusammengebaut werden und finden in vielen Gebieten wie beispielsweise bei Förder- und Bearbeitungssystemen Anwendung. Zum Schutz gegen mögliche Verletzungsgefahren oder auch aus optischen Gründen werden zwischen einander gegenüberstehenden Profilstäben zur Verschalung Platten aus Metall, Kunststoff, Glas oder anderen Werkstoffen eingesetzt.

Zur lösbaren Befestigung von Verschalungsplatten zwischen Profilstäben sind verschiedene Systeme bekannt. Der Nachteil der vorbekannten Systeme liegt darin, dass entweder Bohrungen in den Platten erforderlich sind oder die Platten mit einem verhältnismässig grossen Spiel zu den Profilstäben zugeschnitten werden müssen, wodurch zwischen Profilstäben und Platten ein Luftspalt entsteht.

Der Erfindung liegt daher die Aufgabe zugrunde, ein Befestigungssystem zu schaffen, mit welchem auch ohne Berücksichtigung eines Luftspaltes zugeschnittene Platten schnell und einfach montiert und demontiert werden können. Zudem soll das Befestigungssystem kostengünstig sein.

Zur erfindungsgemässen Lösung der Aufgabe führt bei einer Anordnung der eingangs genannten Art, dass jedes Befestigungselement
- ein erstes Befestigungsteil mit einer im Inneren der Längsnut einer Hinterschneidungsfläche gegenüberliegenden ersten Anschlagfläche und mit einer ersten Seite der Platte in deren Randbereich gegenüberliegenden ersten Anlagefläche, und
- ein zweites Befestigungsteil mit einer im Inneren der Längsnut einer Hinterschneidungskante gegenüberliegenden zweiten Anschlagfläche und mit einer der zweiten Seite der Platte und der ersten Anlagefäche des ersten Befestigungsteils gegenüberliegenden zweite Anlagefläche
   aufweist, und wenigstens eines der beiden Befestigungsteile aus einem elastischen Werkstoff besteht.

Die erfindungsgemässe Anordnung ermöglicht den Einsatz von auf Lichtmass ohne Bildung eines Luftspaltes zugeschnittenen Platten. Diese können nach dem Einsetzen der ersten Befestigungsteile in die Längnut der Profilstäbe an die Anlagefläche der ersten Befestigungsteile angelegt werden. Anschliessend erfolgt das Einsetzen der zweiten Befestigungsteile auf der anderen Seite der Platte in die Längsnut der Profilstäbe. Damit ist die Platte zwischen den Profilstäben fixiert und lässt sich durch einfaches Herausziehen des zweiten Befestigungsteiles aus der Längsnut der Profilstäbe einfach wieder entfernen und beispielsweise austauschen.

Bei einer besonders zweckmässigen Ausführungsform der erfindungsgemässen Anordnung besteht wenigstens eines der Befestigungsteile, bevorzugt jedoch beide, aus einem aus einem Federwerkstoff, insbesondere aus Federstahl, geformten Blechstück.

Das erste Befestigungsteil liegt zweckmässigerweise mit einem Begrenzungsanschlag einer Stirnseite der Platte gegenüber. Hierbei hat es sich als günstig erwiesen, wenn dieser Begrenzungsanschlag querschnittlich bogenförmig gekrümmt ist.

Die zweite Anschlagfläche des zweiten Befestigungsteiles kann zur Verhinderung eines Weggleitens der Anschlagfläche über die Hinterschneidungskante in das Innere der Längsnut wenigstens eine Erhebung aufweisen.

Bevorzugt ist das erste und/oder das zweite Befestigungsteil gegen die Profiloberfläche gerichtet und liegt dieser mit einem freien Ende auf.

Bei einer bevorzugten Ausgestaltung der beiden Befestigungsteile ist deren in die Längsnut einragender Teil querschnittlich im wesentlich V-förmig ausgebildet, wobei die Spitze des V gegen den Boden der Längsnut gerichtet ist und diesem bevorzugt aufliegt.

Bevorzugt sind die Befestigungsteile so ausgestaltet, dass sie in eingesetzter Lage durch deren Federwirkung dem Profilstab und der Platte kraftschlüssig anliegen.

Weitere Vorteile, Merkmale und Einzelheiten der Erfindung ergeben sich aus den nachfolgenden Beschreibung bevorzugter Ausführungsbeispiele sowie anhand der Zeichnung; diese zeigt schematisch in
- Fig. 1: einen Querschnitt durch eine Anschlagfeder;
- Fig. 2: einen Querschnitt durch eine Schliessfeder;
- Fig. 3: einen Querschnitt durch eine Anordnung mit einem Profilstab und mit einer an diesem mit Anschlag- und Schliessfeder gemäss den Figuren 1 und 2 befestigen Platte.

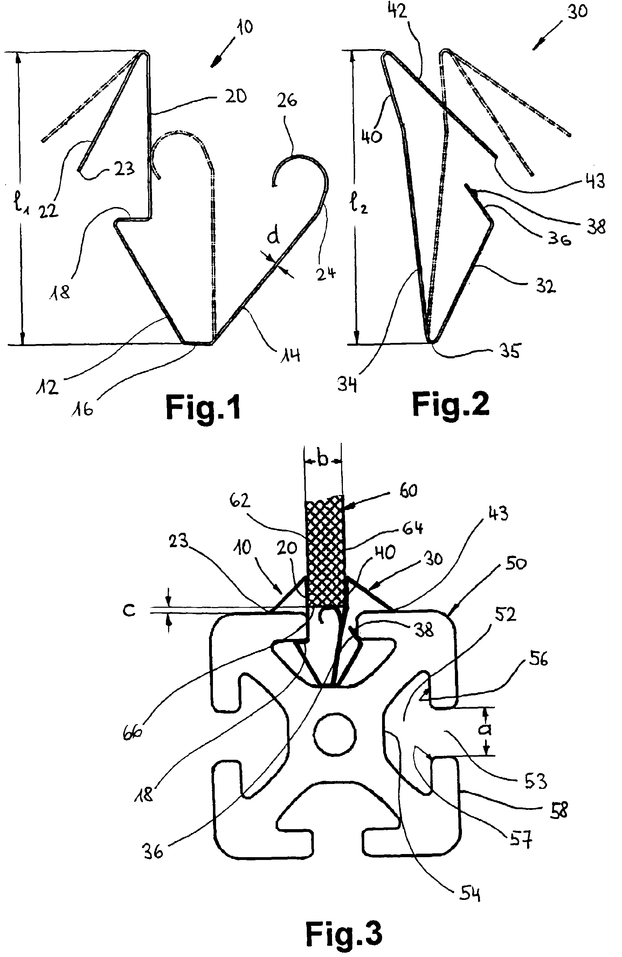

Eine in Fig. 1 gezeigte Anschlagfeder 10 aus Federstahblech einer Dicke d von beispielsweise 0.15 mm mit einer Breite von beispielsweise 30mm und einer Gesamthöhe l₁ von z.B. 18 mm weist einen im wesentlichen V-förmigen Teil mit einem ersten Schenkelstreifen 12, einem zweiten Schenkelstreifen 14 und einen die beiden Schenkelstreifen verbindenden Bodenstreifen 16 auf. Der Schenkelstreifen 12 ist unter Bildung eines horizontalen Anschlagstreifens 18 nach innen umgebogen und erstreckt sich anschliessend unter Bildung eines Anlagestreifens 20 vertikal nach oben. Nach einer weiteren nach aussen gerichteten Krümmung und unter Einschluss eines spitzen Winkels weist dieser als Auflagestreifen 22 mit einem freien Ende 23 schräg nach unten. Der zweite Schenkelstreifen 14 ist zu einem Federstreifen 24 leicht nach innen geknickt und endet in einem anschliessenden, ebenfalls einwärts gekrümmten Bogenstreifen 26.

Eine in Fig. 2 dargestellte, aus demselben Material wie die Anschlagfeder 10 gefertigte Schliessfeder 30 gleicher Breite wie die Anschlagfeder 10 und einer der Höhe l₁ der Anschlagfeder 10 entsprechenden Höhe l₂ weist einen im wesentlichen V-förmigen Teil mit einem ersten Schenkelstreifen 32, einem zweitem Schenkelstreifen 34 und einer die beiden Schenkelstreifen verbindenden Krümmung 35 auf. Der erste Schenkelstreifen 32 ist unter Bildung eines Anschlagstreifens 36 nach innen abgebogen. Auf der Aussenseite des Anschlagstreifens 36 ragen von dessen Oberfläche Noppen 38 auf. Der zweite Schenkelstreifen 34 ist unter Bildung eines Anlagestreifens 40 leicht nach aussen geknickt und anschliessend unter Bildung eines Auflagestreifens 42 unter Einschluss eines spitzen Winkels nach innen umgebogen.

In den Fig. 1 und 2 ist mit unterbrochenen Linien die ungefähre Stellung der Anschlagfeder 10 und der Schliessfeder 30 nach entsprechender Auslenkung der Schenkelstreifen 12 bzw. 34 und der Auflagestreifen 22 bzw. 42 im montierten Zustand gezeigt, wie nachfolgend anhand der Fig. 3 erläutert.

Fig. 3 zeigt einen querschnittlich quadratischen, aus beispielsweise einer Aluminiumlegierung stranggepressten Profilstab 50 mit von jeder der vier Profiloberflächen 58 ausgehenden, symmetrisch angeordneten hinterschnittenen Längsnuten 52. Die Längsnuten 52 weisen parallel zu den Profiloberflächen 58 verlaufende Hinterschneidungsflächen 56 auf. In einer der Längsnuten 52 mit einer Schlitzbreite a von beispielsweise 8 mm ist eine Anschlagfeder 10 sowie eine dieser gegenüberstehende Schliessfeder 30 eingesetzt. Der Anlagestreifen 20 der Anschlagfeder 10 und der Anlagestreifen 40 der Schliessfeder 30 liegen den beiden Seiten 62, 64 einer Platte 60 mit einer Dicke b von z.B. 6 mm in deren Randbereich an, wobei eine Stirnseite 66 der Platte 60 dem Bogenstreifen 26 der Anschlagfeder 10 aufliegt. Im gezeigten Beispiel endet die Stirnseite 66 in einem Abstand c von beispielsweise 0.5 mm vor der Profiloberfläche 58.

Der horizontale Anschlagstreifen 18 der Anschlagfeder 10 liegt der in der Hinterschneidungsfläche 56 an und ist dadurch in der Längsnut 52 verankert.

Der Anschlag 36 der Schliessfeder 30 liegt einer Hinterschneidungskante 57 beim Übergang von der Hinterschneidungsfläche 56 in den Öffnungsschlitz 53 der Längsnut 52 an. Der zweite Schenkelstreifen 14 der Anschlagfeder 10 und der zweite Schenkelstreifen 34 der Schliessfeder 30 liegen einander im Inneren der Längsnut 52 flächig an. Anschlagfeder 10 und Schliessfeder 30 liegen mit dem Bodenstreifen 16 bzw. der Krümmung 35 dem Nutboden 54 an. Die freien Enden 23, 43 der beiden Auflagestreifen 22, 42 der Anschlagfeder 10 bzw. der Schliessfeder 30 liegen der Profiloberfläche 58 federnd an.

Die querschnittliche Form der Anschlagfeder 10 und der Schliessfeder 30 ist so gewählt, dass in eingesetzter Lage Federkräfte erzeugt werden und demzufolge die beiden Befestigungsteile durch Federwirkung kraftschlüssig in der Längsnut 52 gehalten sind und gleichzeitig auch die Platte 60 zwischen Anschlagfeder 10 und Schliessfeder 30 eingeklemmt ist.

Nachfolgend wird das Einsetzen einer Platte 60 zwischen zwei einander gegenüberliegenden bzw. einen festen Rahmen bildenden Profilstäben 50 näher erläutert.

In einem seitlichen Abstand von beispielsweise 10 bis 20 cm werden Anschlagfedern 10 in die Längsnuten 52 der Profilstäbe 50 eingesetzt .Anschliessend wird die Platte 60 von der anderen Seite her an die Anlagestreifen 20 angelegt. Nachfolgend werden die Schliessfedern 30 jeweils den Anschlagfedern 10 gegenüberliegend in die Längsnut 52 eingedrückt, wobei der zweite Schenkelstreifen 34 der Schliessfeder 30 mit dem zweiten Schenkelstreifen 14 der Anschlagfeder 10 zur Anlage gelangt und diesen entgegen seiner Federkraft nach innen drückt. Bei dieser Bewegung wird auch der Bogenstreifen 26 mit zunehmender Kraft gegen die Stirnseite 66 der Platte 60 gedrückt, so dass die Platte 60 auch stirnseitig zwischen zwei einander gegenüberstehenden Profilstäben 50 kraftschlüssig gehalten ist. Der seitliche Klemmdruck der Anlagestreifen 20, 40 auf die Seiten 60, 64 der Platte 60 wird zusätzlich noch dadurch erhöht, dass durch die an der Profiloberfläche 58 anstehenden freien Enden 23, 43 der Auflagestreifen 22, 42 diese unter Federspannung stehen und dadurch die Anlagestreifen 20, 40 zusätzlich gegen die Seiten 62, 64 der Platte 60 drücken.

Da der Anschlagstreifen 36 der Schliessfeder 30 nur der Hinterschneidungskante 57 anliegt, kann die Schliessfeder 30 durch Anheben des Auflagestreifens 42 mittels eines zwischen diesem und der Profiloberfläche 58 eingesetzten Schraubenziehers auf einfache Weise aus der Längsnut 52 entfernt werden. Damit lassen sich Platten 60 auf einfache Weise entfernen bzw. ersetzen.

## Patentansprüche

1. Anordnung mit wenigstens zwei zumindest eine hinterschnittene Längsnut (52) aufweisenden Profilstäben (50) und mit wenigstens einer zwischen einander gegenüberstehenden Längsnuten (52) mittels in diesen verankerten Befestigungselementen auswechselbar eingesetzten Platte (60),
dadurch gekennzeichnet, dass
jedes Befestigungselement
- eine erstes Befestigungsteil (10) mit einer im Inneren der Längsnut (52) einer Hinterschneidungsfläche (56) gegenüberliegenden ersten Anschlagfläche (18) und mit einer einer ersten Seite (62) der Platte (60) in deren Randbereich gegenüberliegenden ersten Anlagefläche (20), und
- ein zweites Befestigungsteil (30) mit einer im Inneren der Längsnut (52) einer Hinterschneidungskante (57) gegenüberliegenden zweiten Anschlagfläche (36) und mit einer der zweiten Seite (64) der Platte (60) und der ersten Anlagefläche (20) des ersten Befestigungsteils (10) gegenüberliegenden zweiten Anlagefläche (40)
aufweist, und wenigstens eines der beiden Befestigungsteile (10, 30) aus einem elastischen Werkstoff

2. Anordnung nach Anspruch 1, dadurch gekennzeichnet, dass wenigstens eines der Befestigungsteile (10, 30) aus einem aus einem Federwerkstoff, insbesondere aus Federstahl, geformten Blechstück besteht.

3. Anordnung nach Anspruch 2, dadurch gekennzeichnet, dass das erste Befestigungsteil (10) mit einem Begrenzungsanschlag (26) einer Stirnseite (66) der Platte (60) gegenüberliegt.

4. Anordnung nach Anspruch 2 oder 3, dadurch gekennzeichnet, dass der Begrenzungsanschlag (26) querschnittlich bogenförmig gekrümmt ist.

5. Anordnung nach einem der Ansprüche 2 bis 4, dadurch gekennzeichnet, dass die zweite Anschlagfläche (36) des zweiten Befestigungsteiles (30) zur Vermeidung eines Weggleitens der Anschlagfläche (36) über die in der Hinterschneidungskante (57) in das Innere der Längsnut (52) wenigstens eine Erhebung (38) aufweist.

6. Anordnung nach einem der Ansprüche 2 bis 4, dadurch gekennzeichnet, dass das erste (10) und/oder das zweite Befestigungsteil (30) gegen die Profiloberfläche (58) gerichtet ist und dieser mit einem freien Ende (23, 43) aufliegt.

7. Anordnung nach einem der Ansprüche 2 bis 6, dadurch gekennzeichnet, dass der in die Längsnut (52) einragende Teil der Befestigungsteile (10, 30) querschnittlich im wesentlichen V-förmig ausgebildet ist, wobei die Spitze des V gegen den Boden (16) der Längsnut (52) gerichtet ist und diesem vorzugsweise aufliegt.

8. Anordnung nach einem der Ansprüche 2 bis 7, dadurch gekennzeichnet, dass die Befestigungselemente (10, 30) in eingesetzter Lage durch deren Federwirkung dem Profilstab (50) und der Platte (60) kraftschlüssig anliegen.
